# EUROPÄISCHE PATENTSCHRIFT

(11) **EP 3 334 972 B1**
(45) Veröffentlichungstag und Bekanntmachung des Hinweises auf die Patenterteilung: **20.10.2021**
(21) Anmeldenummer: 16757833.5
(22) Anmeldetag: 10.08.2016
(51) Int. Cl.: F16P 3/14, H05B 45/00, H05B 47/115

(54) **EINRICHTUNG ZUM ABSICHERN EINES SICHERHEITSBEREICHS UM MINDESTENS EINE AUTOMATISCH ARBEITENDE MASCHINE**
DEVICE FOR SECURING A SAFETY AREA AROUND AT LEAST ONE AUTOMATICALLY OPERATING MACHINE
DISPOSITIF PERMETTANT DE PROTÉGER UNE ZONE DE SÉCURITÉ AUTOUR D'AU MOINS UNE MACHINE FONCTIONNANT DE MANIÈRE AUTONOME

(30) Priorität: 10.08.2015 DE 102015215234
(43) Veröffentlichungstag der Anmeldung: 20.06.2018
(73) Patentinhaber: Fraunhofer-Gesellschaft zur Förderung der angewandten Forschung e.V., 80686 München (DE)
(72) Erfinder: ELKMANN, Norbert, 39104 Magdeburg (DE); VOGEL, Christian, 09112 Chemnitz (DE); FRITZSCHE, Markus, 39114 Magdeburg (DE)
(74) Vertreter: Pfenning, Meinig & Partner mbB
(86) Internationale Anmeldenummer: PCT/EP2016/069015
(87) Internationale Veröffentlichungsnummer: WO 2017/025551

(56) Entgegenhaltungen:
- EP-B1- 2 558 886
- WO-A1-2007/085330
- WO-A1-2016/000770
- US-A1- 2006 082 465

## Beschreibung

Die Erfindung betrifft eine Einrichtung zur Absicherung eines Sicherheitsbereichs um eine automatisch arbeitende Maschine, insbesondere in einem von Menschen und Maschinen gemeinsam genutzten Arbeitsbereich, gemäß dem Oberbegriff des Hauptanspruchs.

In Arbeitsräumen, die von Menschen und Maschinen, wie beispielsweise autonom arbeitenden Maschinen und/oder Robotern gemeinsam genutzt werden, muss zu jedem Zeitpunkt ausgeschlossen werden, dass Menschen durch die Maschinen verletzt werden. Verletzungen können hierbei beispielsweise durch Zusammenstöße von Menschen und Maschinen oder auch durch Funkenflug, der durch die Arbeit der Maschine entsteht, geschehen.

Um derartige Verletzungen zu verhindern, wird für jede Maschine ein Sicherheitsbereich definiert, wobei der Sicherheitsbereich statisch oder in Abhängigkeit von der aktuellen Arbeit oder einer Bewegung der Maschine dynamisch sein kann. Der Sicherheitsbereich wird dann mittels verschiedener Sicherheitstechniken, beispielsweise Laserscanner, Lichtschranken, kamerabasierter Sensorsysteme, projektionsbasierte Sensorsysteme oder taktiler Fußbodenbeläge, überwacht. Diese Sicherheitstechniken erfassen den Abstand einer Person zur Gefahrenquelle und bei einer detektierten Verletzung des Sicherheitsbereichs wird eine sicherheitsrelevante Funktion der Maschine ausgelöst, beispielsweise wird die Maschine in einen Not-Aus Zustand versetzt, die Arbeit der Maschine wird verlangsamt oder ein gefährdender Teil der Maschine wird angehalten oder räumlich entfernt. Für den Menschen ist dieser Sicherheitsabstand in den meisten Fällen jedoch nicht oder nur unzureichend wahrnehmbar. Daher kommt es in der Praxis häufig vor, dass eine Person versehentlich in den Sicherheitsbereich einer Maschine eindringt und die Anlage somit unwillkürlich zum Stillstand bringt.

Aus der EP 2558886 B1 ist eine Einrichtung zur Überwachung eines dreidimensionalen Gefahrenbereichs vorhanden. Die Überwachung erfolgt hierbei durch projizierte Lichtmarkierungen, die durch ein Kamerasystem überwacht werden. Hierdurch wird eine Einrichtung zur Absicherung eines Sicherheitsbereichs, in dem sich eine automatisch arbeitende Maschine befindet, beschrieben, wobei diese Sicherheitseinrichtung eine sichtbar oder unsichtbar leuchtende, projizierte Markierung umfasst. Diese Markierung ist auf einer den Sicherheitsbereich begrenzenden Fläche angeordnet und markiert zumindest einen Teil des Sicherheitsbereichs und/oder zumindest einen Teil einer Begrenzung des Sicherheitsbereichs. Weiterhin ist aus der EP 2558886 B1 eine Steuereinrichtung bekannt, die zur Steuerung der Maschine, zur Bestimmung des Sicherheitsbereichs aus einem Betriebszustand der Maschine und/oder zur Steuerung einer Form, einer Struktur und/oder eines Ortes der leuchtenden Markierung dienen kann.

Aus der US 2006/0082465 A1 ist weiterhin ein Überwachungssystem für eine Maschine bekannt, bestehend aus einer Schaltermatte die elektrisch mit der Maschine verbunden ist. Die Schaltermatte befindet sich auf dem Boden neben der Maschine und beinhaltet einen druckausgelösten Schaltermechanismus, so dass der Strom der Maschine ausgeschaltet wird, wenn Druck auf die Matte ausgeübt wird. Die Schaltermatte beinhaltet außerdem ein Zustandsindikatordisplay, welches entsprechend des Zustands der Maschine beleuchtet wird.

Der vorliegenden Anmeldung liegt die Aufgabe zugrunde, eine Einrichtung zum Absichern eines Sicherheitsbereichs zu schaffen, die einfach in ihrem Aufbau ist und durch die eine Sichtbarmachung des Sicherheitsbereichs gewährleistet wird.

Diese Aufgabe wird gelöst durch die Merkmale des Hauptanspruchs. Vorteilhafte Weiterbildungen sind durch die abhängigen Ansprüche beschrieben.

Bei der Einrichtung zum Absichern eines Sicherheitsbereichs bzw. zur Markierung des Sicherheitsbereichs gemäß dem Oberbegriff des Hauptanspruchs der vorliegenden Anmeldung ist auf der Fläche, wie beispielsweise einem Fußboden, einer Wand, einem Tisch und/oder einer Oberfläche der Maschine, die den Sicherheitsbereich begrenzt, eine Vielzahl von ortsaufgelöst ansteuerbaren Lichtquellen angeordnet. Jede dieser Lichtquellen umfasst mindestens einen inaktiven Betriebszustand, beispielsweise "aus" oder "stand-by", sowie mindestens einen aktiven Betriebszustand, beispielsweise "an" oder "blinkend", wobei der Betriebszustand der Lichtquellen durch die Steuereinrichtung steuerbar ist. Die Markierung ist dabei als mindestens eine der Lichtquellen in einem aktiven Betriebsmodus ausgebildet.

Von einer Markierung des Sicherheitsbereichs kann beispielsweise gesprochen werden, sofern dieser lediglich markiert wird, von einer Absicherung kann beispielsweise gesprochen werden, sofern die Markierung den Sicherheitsbereich hervorhebt und somit absichert. Ferner kann von einer Absicherung auch dann gesprochen werden, falls der Sicherheitsbereich neben der Markierung auch eine Vorrichtung zur Überwachung des Sicherheitsbereichs umfasst.

Somit ist die leuchtende Markierung selbstleuchtend und direkt steuerbar. Eine Verschattung der Markierung durch die abzusichernde Maschine kann vermieden werden.

Bei einer autonomen oder auf andere Art verursachten Bewegung der Maschine, die sich in dem Sicherheitsbereich befindet, kann in Reaktion auf die Bewegung und/oder die damit verbundene Änderung des Betriebszustands der Maschine, der Sicherheitsbereich und/oder die leuchtende Markierung durch die Steuereinrichtung dynamisch und in Korrespondenz zur Bewegung der Maschine geändert werden.

Somit entsteht ein dynamischer Sicherheitsbereich, der jederzeit auf die aktuelle Gefahrensituation, die von der Maschine ausgeht, abgestimmt ist. Eine Bewegung der Maschine im obigen Sinne kann den Standort der Maschine verändern, muss dies aber nicht tun. Es ist vielmehr auch möglich, dass die Maschine an einem Ort bleibt und sich nur ein Teil der Maschine, beispielsweise ein Greifarm oder eine Sägeblatt, bewegt. Durch eine derartige Bewegung kann eine Änderung des Sicherheitsbereichs indiziert sein, um beispielweise den Aktionsradius eines Maschinenteils oder einen Bereich, in dem Funken- oder Spanflug zu erwarten ist, abzusichern.

Auch ist es möglich, dass die Steuereinrichtung weiterhin konfiguriert ist, den Sicherheitsbereich der Maschine in Abhängigkeit von einer Änderung des Betriebszustands der Maschine zu ändern. Beispielsweise braucht eine ausgeschaltete Maschine keinen oder nur einen sehr kleinen Sicherheitsbereich. Bei Inbetriebnahme der Maschine wird durch die Steuereinrichtung automatisch der Sicherheitsbereich in Abhängigkeit der Betriebsdaten der Maschine vergrößert. Bereits bei Stand-by-Betrieb kann ein größerer Sicherheitsbereich indiziert sein, damit sich bei Inbetriebnahme der Maschine keine Personen in der direkten Nähe der Maschine befinden

Die verschiedenen gewünschten Sicherheitsbereiche für die möglichen Betriebszustände einer Maschine können individuell festgelegt werden und können, gegebenenfalls innerhalb der gesetzlich vorgeschriebenen Normen, durch einen entsprechend ausgebildeten Benutzer veränderbar sein.

Bei einer Änderung des Sicherheitsbereichs wird vorzugsweise automatisch die leuchtende Markierung an den neuen Sicherheitsbereich angepasst. Dabei kann die leuchtende Markierung und/oder der Betriebsmodus mindestens einer der Lichtquellen geändert werden. Beispielsweise können Lichtquellen, die für die Markierung des neuen Sicherheitsbereichs nicht mehr benötigt werden durch die Steuereinrichtung ausgeschaltet und andere Lichtquellen, die sich bisher in einem inaktiven Betriebsmodus befanden, durch die Steuereinrichtung in einen aktiven Betriebsmodus versetzt werden.

Hierbei ist es möglich, dass der alte Sicherheitsbereich zunächst sichtbar bleibt, was gerade beim Abschalten einer Maschine vorteilhaft sein kann, wenn sich innerhalb des alten Sicherheitsbereichs noch Gefahrenquellen wie beispielsweise bei Betrieb der Maschine entstandene Abfallprodukte befinden können.

Erfindungsgemäß, ist der Betriebsmodus jeder der Lichtquellen individuell durch die Steuereinheit steuerbar. Durch individuelle Steuerbarkeit wird eine hohe Flexibilität bei der Gestaltung der leuchtenden Markierung erreicht. Alternativ ist es auch möglich, dass die Lichtquellen in Blöcken oder Reihen steuerbar sind. Es ist auch möglich, bei einer individuellen Steuerbarkeit der Lichtquellen, Gruppen individueller Lichtquellen zu definieren um die Steuerung von Lichtquellen, die meist gemeinsam angesteuert werden, zu vereinfachen.

Die Lichtquellen können weiterhin in ihrer Farbe, Helligkeit und/oder Frequenz modulierbar sein. Somit ist es möglich, verschiedene Sicherheitsbereiche unterschiedlich zu markieren, oder durch die Markierung Zusatzinformationen farblich codiert und/oder visualisiert an eine Person zu übermitteln. Beispielsweise können verschiedene Farben für unterschiedliche Gefahrenstufen verwendet werden.
Weiterhin ist es möglich, zusätzlich zur Markierung des Sicherheitsbereichs noch weitere Informationen durch die Lichtquellen an eine Person zu übermitteln, beispielsweise Informationen über die voraussichtliche Laufzeit einer Maschine, über eine notwendige Wartung der Maschine oder über die Art der von der Maschine ausgehenden Gefährdung. Diese Zusatzinformationen können beispielsweise in Form von Piktogrammen oder leuchtender Schrift an einen Benutzer übermittelt werden.

Es ist ferner auch möglich einen Sicherheitsbereich durch infrarotes Licht unsichtbar für das menschliche Auge zu markieren, beispielsweise wenn sich in der Nähe des Sicherheitsbereichs keine Personen aufhalten, oder wenn eine sichtbar leuchtende Markierung für die Arbeitsabläufe in einem Bereich störend wäre.
Die Markierung eines Sicherheitsbereichs kann flächig sein oder durch Linien, Konturen oder Muster erfolgen wobei in Abhängigkeit von der Gestaltung des Raumes und des Sicherheitsbereichs kein vollständiger Kreiszug zur Markierung einer Begrenzung des Sicherheitsbereichs notwendig sein muss.

Weiterhin kann die Steuereinrichtung konfiguriert sein, den Sicherheitsbereich, beispielsweise in Abhängigkeit von einer Bewegung und/oder einer Änderung des Betriebszustands der Maschine, in mindestens einen ersten und einen zweiten Sicherheitsbereich aufzuteilen, wobei durch die leuchtende Markierung zumindest ein Teil des ersten Sicherheitsbereichs und/oder zumindest ein Teil einer Begrenzung des ersten Sicherheitsbereichs, sowie zumindest ein Teil des zweiten Sicherheitsbereichs und/oder zumindest ein Teil einer Begrenzung des zweiten Sicherheitsbereichs markiert ist.

Bei manchen Maschinen ist es vorteilhaft, wenn der Sicherheitsbereich um die Maschine in mehrere Sicherheitsstufen unterteilt ist, so dass bei einer Detektion einer Verletzung eines Bereichs einer niedrigen Sicherheitsstufe durch die Steuereinrichtung eine andere Reaktion erfolgt als bei einer Verletzung eines Bereichs einer höheren Sicherheitsstufe.

Hierbei ist es möglich, dass durch unterschiedliche Farben, Helligkeiten und/oder Frequenzen der Lichtquellen mindestens zwei unterschiedliche disjunkte, ineinander verschachtelte und/oder überlappende Sicherheitsbereiche und/oder Sicherheitsstufen eines Sicherheitsbereichs markiert sind.

Durch die Markierung unterschiedlicher Sicherheitsbereiche und/oder Sicherheitsstufen mit verschiedenen Farben kann ein Benutzer das Gefahrenpotential der einzelnen Maschinen und/oder Bereiche des Arbeitsraumes besser einschätzen.

Die Lichtquellen können vorzugsweise punktförmig, beispielsweise in Form von ein- oder mehrfarbigen LEDs, ausgebildet sein. Vorteilhaft kann hierbei die Verwendung von RGB LEDs, die ein besonders breites Farbspektrum wiedergeben können, sein. Durch derartige kleine leuchtende Punkte können Markierungen besonders flexibel und präzise gestaltet werden.

Weiterhin können die Lichtquellen auf oder in der Fläche, die den Sicherheitsbereich begrenzt, regelmäßig und/oder matrixförmig angeordnet sein, vorzugsweise engmaschig beispielsweise mit einem Abstand von maximal 10 cm, bevorzugt maximal 5 cm. Der Abstand kann vorzugsweise so gewählt sein, dass mit hoher Wahrscheinlichkeit zu erwarten ist, dass bei einer Verletzung des Sicherheitsbereichs zumindest eine der Lichtquellen - beispielsweise durch eine Person oder ein maschinenfremdes Objekt - zumindest temporär verdeckt wird.
Somit ist es möglich, einen Arbeitsbereich großflächig mit Lichtquellen zu versehen, die dann in Abhängigkeit eines oder mehrere Sicherheitsbereiche durch die Steuereinrichtung aktiviert werden können, um den bzw. die Sicherheitsbereiche zu markieren.
Um eine möglichst einfache, flächige Ausstattung eines Arbeitsbereichs mit Lichtquellen zu erreichen, können die Lichtquellen auf Lichtmatten angeordnet sein, die einfach verlegt und angeschlossen werden können. Beispielsweise können die Lichtmatten in Form von Fliesen oder als aufgerollte Bahnen geliefert und dann auf einer Fläche, beispielsweise einem Fußboden, einer Wand, Arbeitstisch oder einer anderen beliebigen Oberfläche des Arbeitsbereichs ausgelegt, angebracht und gegebenenfalls befestigt werden.

Weiterhin umfasst die Sicherheitseinrichtung eine sensorische Überwachungseinrichtung, durch die eine Verletzung des Sicherheitsbereichs detektierbar ist. Abhängig von einer Detektion einer Verletzung des Sicherheitsbereichs durch die Überwachungseinrichtung, beispielsweise bei Eindringen einer Person in den Sicherheitsbereich, kann durch die Steuereinrichtung eine sicherheitsrelevante Funktion ausgelöst werden, beispielsweise kann der Betriebszustand der Maschine, die sich in dem Sicherheitsbereich befindet, geändert werden, der Betriebsmodus mindestens einer der Lichtquellen kann geändert werden oder ein Alarm kann ausgelöst werden. Vorzugsweise kann bei Detektion einer Verletzung des Sicherheitsbereichs die Maschine ausgeschaltet oder in einen anderen sicheren Betriebszustand überführt werden, gegebenenfalls in Kombination mit einer Änderung der Form, Struktur und/oder des Ortes der leuchtenden Markierung.
Weiterhin kann beispielsweise ein akustischer oder visueller Alarm ausgelöst werden. Der visuelle Alarm kann hierbei auch die leuchtende Markierung betreffen, beispielsweise durch Blinken der leuchtenden Markierung. Durch einen visuellen Alarm kann lokal begrenzt die Aufmerksamkeit eines Benutzers auf die Markierung und den Sicherheitsbereich gelenkt werden. Bei Verwendung eines akustischen Alarms kann der Alarm auch in größerer Entfernung noch bemerkt werden.

Die Überwachungseinrichtung kann hierbei ein ortsauflösendes, berührungssensitives Sensorsystem umfassen, beispielsweise wie in EP2147502 B1 beschrieben. Ein solches Sensorsystem besteht aus einer Vielzahl von Sensorzellen, welche auf oder in der den Sicherheitsbereich begrenzenden Fläche angeordnet sind. Die Sensorzellen können hierbei beispielsweise als taktile Sensormatten angeordnet sein, durch die die Kraft und der Ort einer Berührung erfasst werden kann.

Eine Verletzung des Sicherheitsbereichs kann mit Hilfe des berührungssensitiven Sensorsystems detektierbar sein, wenn durch das Sensorsystem eine Berührung oberhalb eines festgelegten Schwellenwertes erfasst ist. Der Schwellenwert kann hierbei so gewählt sein, dass ein Betreten des Sicherheitsbereichs durch eine Person detektierbar ist. Leichte Berührungen können hingegen durch die Überwachungseinrichtung toleriert werden, um ein ungerechtfertigtes Abschalten der Maschine zu verhindern.

Es kann vorteilhaft sein, wenn jeder der Vielzahl der Sensorzellen mindestens eine der Lichtquellen örtlich zugeordnet ist. Somit ist es möglich, dass die Sensorzellen größer als oder gleich groß wie die einzelnen Lichtquellen sind. Durch die Steuereinrichtung können die einzelnen Sensorzellen und die zugeordneten Lichtquellen funktionell gekoppelt sein, so dass eine automatische Markierung eines Bereichs, in dem eine Berührung detektiert wurde, möglich ist.

Auf die den Sicherheitsbereich begrenzenden Fläche können separate Sensormatten und Lichtmatten übereinander aufgebracht werden. Hierbei ist es vorteilhaft, wenn die Matten so beschaffen sind, dass die obere Matte die Funktionalität der unteren Matte nicht beeinträchtigt. Hierzu können die Matten beispielsweise sehr dünn und/oder durchsichtig gefertigt sein.

Weiterhin ist es möglich, die Lichtquellen und berührungssensitiven Sensorzellen in kombinierten Licht-Sensormatten auszubilden, die auf der den Sicherheitsbereich begrenzenden Fläche verlegt werden können. Durch kombinierte Licht-Sensormatten ist es möglich, die oben beschriebenen Probleme beim Verlegen von zwei Schichten zu umgehen. Außerdem kann bei kombinierten Licht-Sensormatten die funktionelle Verknüpfung von Sensorzellen und Lichtquellen direkt gegeben sein.

Es ist weiterhin auch möglich, dass die Überwachungseinrichtung eine Aufnahmevorrichtung, beispielsweise mindestens eine Kamera zur bildlichen Überwachung des Sicherheitsbereichs oder einen Laserscanner umfasst. Durch eine Aufnahmevorrichtung können Bewegungen von Menschen und Maschinen im Arbeitsbereich erfasst werden, und eine Annäherung eines Menschen an eine Maschine oder ein Betreten und/oder anderweitiges Verletzen des Sicherheitsbereichs um eine Maschine durch den Menschen kann detektiert werden.

Bei Verwendung einer Aufnahmevorrichtung durch die Überwachungseinrichtung kann eine Verletzung des Sicherheitsbereichs durch die Überwachungseinrichtung beispielsweise detektierbar sein, wenn mindestens eine vorgegebene Anzahl der den Sicherheitsbereich markierenden Lichtquellen nicht durch die Aufnahmevorrichtung erfasst sind. Hierbei kann, zum Beispiel, die Detektion analog zu dem in der EP 2558886 B1 beschriebenen Verfahren zum Vergleich eines Ist-Abbildes mit einem Soll-Abbild erfolgen.

Zur Erhöhung der Sicherheit ist es auch möglich, einen Sicherheitsbereich gleichzeitig durch ein berührungssensitives Sensorsystem und eine Aufnahmevorrichtung abzusichern. Hierbei wird das Risiko eines Ausfalls der Überwachungseinrichtung minimiert und somit eine höhere Sicherheitskategorie erreicht.

Obgleich bislang zumeist eine Einrichtung zur Absicherung eines Sicherheitsbereichs diskutiert wurde, umfasst die Anmeldung auch eine Verwendung einer Einrichtung zur Absicherung des Sicherheitsbereichs gemäß dieser Beschreibung bzw. einer der Ansprüche beim Betrieb einer Maschine. Dazu wird die Markierung des Sicherheitsbereichs in Abhängigkeit vom Standort der Maschine (wie beispielsweise eines beispielsweise mit einem Werkzeug bestückten Roboters) angezeigt und angepasst werden. Ausführungsformen der Verwendung lassen sich dieser Anmeldung entnehmen.

Ferner umfasst die Anmeldung auch ein Verfahren zum Absichern eines Sicherheitsbereichs. Dabei kann eine Einrichtung zum Absichern eines Sicherheitsbereichs gemäß der Anmeldung zur Anwendung kommen.

Zunächst wird ein Sicherheitsbereich einer Maschine bestimmt, welcher beispielsweise durch den Aktionsradius eines Teils der Maschine (wie einem Roboterarm) und ggf. einen zusätzlichen Sicherheitsabstand definiert sein kann. Dabei kann der Sicherheitsbereich entweder extern, d.h. mit einer Überwachungseinrichtung, vermessen bzw. erfasst werden oder durch die Maschine an eine Steuerungseinrichtung einer Einrichtung zum Absichern des Sicherheitsbereichs übermittelt werden.

Nach dem Definieren des Sicherheitsbereichs steuert die Steuerungseinrichtung Lichtquellen an, welche sich auf einer den Sicherheitsbereich umfassenden Fläche angeordnet sind. Aufgrund der Ansteuerung durch die Steuerungseinrichtung können die Lichtquellen beispielsweise eine Grenze des Sicherheitsbereichs, den gesamten Sicherheitsbereich oder den den Sicherheitsbereich umgebenden sicheren Bereich markieren.

In verschiedenen Ausführungsformen wird der Sicherheitsbereich beispielsweise in Abhängigkeit von der Konfiguration der Maschine (beispielsweise bei einem Werkzeugwechsel eines Roboterarms) oder in Abhängigkeit vom Maschinenstandort neu definiert und der neue bzw. aktualisierte Sicherheitsbereich durch die Steuerungseinrichtung erfasst und markiert. Weitere Ausführungsformen lassen sich der Anmeldung entnehmen.

Ausführungsformen, welche im Rahmen einer Verwendung oder eines Verfahrens beschrieben sind, können auch in der Einrichtung nach einem der Ansprüche beansprucht werden.

Weitere vorteilhafte Ausführungsformen sind nachfolgend anhand der Figuren beschrieben. Hierbei zeigt
- Fig. 1: eine Draufsicht eines Sicherheitsbereichs um eine Maschine mit leuchtenden Markierungen,
- Fig. 2: eine Änderung des Sicherheitsbereichs bei einer Bewegung der Maschine,
- Fig. 3: eine Draufsicht einer Fläche mit punktförmigen LEDs,
- Fig. 4: einen Querschnitt eines mehrschichtigen Flächenbelags aus LEDs und Sensorzellen,
- Fig. 5: einen Querschnitt einer kombinierten Licht-Sensormatte,
- Fig. 6: einen LED Fußboden mit zusätzlicher Kameraüberwachung und
- Fig. 7: den LED Fußboden mit Kameraüberwachung aus Fig. 6, wobei eine Teilmenge der LEDs verdeckt ist.

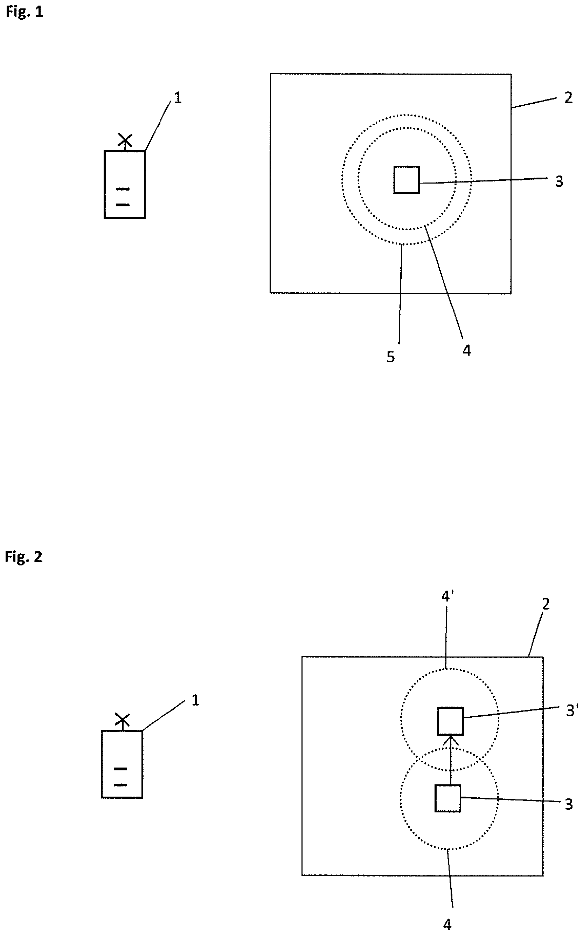

In Fig. 1 ist ein Fußboden 2 eines Arbeitsbereichs, der von Menschen und Robotern gemeinsam genutzt wird, gezeigt. In diesem Arbeitsbereich befindet sich ein Roboter 3. Durch eine Steuereinrichtung 1 wird auf Grundlage des Betriebszustands des Roboters 3 zum Beispiel ein zweistufiger Sicherheitsbereich des Roboters 3 bestimmt. Die Steuereinrichtung steuert LEDs, die auf dem Fußboden derart angeordnet sind, dass zwei leuchtende Markierungskreise 4, 5 den Sicherheitsbereich des Roboters markieren. Hierbei leuchtet die innere Markierung 4 rot und zeigt somit eine hohe Sicherheitsstufe an, während die äußere Markierung 5 gelb leuchtet und somit eine niedrigere Sicherheitsstufe anzeigt. Auf dem Fußboden 2 sind außerdem weitere LEDs angeordnet, die aktuell nicht zur Markierung des Sicherheitsbereichs verwendet sind und die in der Figur nicht dargestellt sind.

Durch die Markierungen 4, 5 ist der Sicherheitsbereich um den Roboter 3 für eine Person gut erkennbar, so dass die Gefahr eines versehentlichen Betretens des Sicherheitsbereichs reduziert wird.

Wenn sich der Roboter 3 nun zu einer neuen Position 3' im Arbeitsbereich bewegt, so wird durch die Steuereinrichtung 1 ein neuer Sicherheitsbereich bestimmt und durch eine leuchtende LED Markierung 4' markiert. Die alte leuchtende LED Markierung 4 wird durch die Steuereinrichtung ausgeschaltet in Reaktion auf die Bewegung des Roboters. So kann die Markierung 4, 4' dynamisch den aktuellen Sicherheitsbereich des Roboters 3 kennzeichnen.

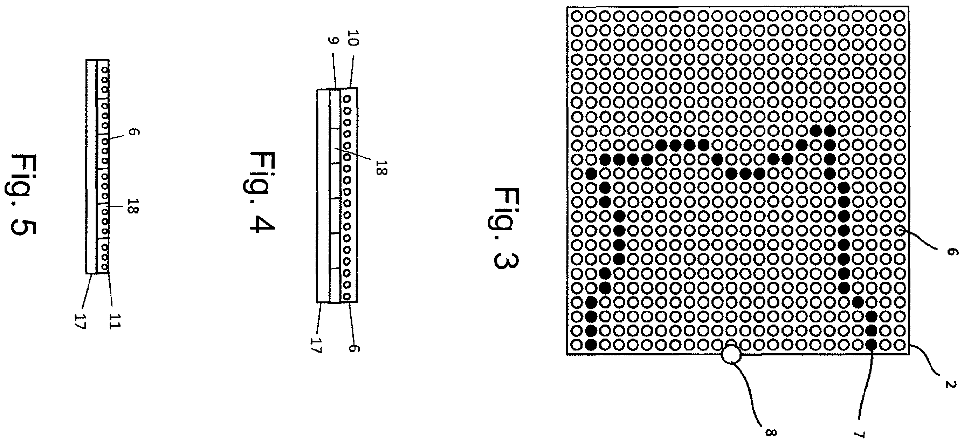

Fig. 3 zeigt eine detailliertere Draufsicht einer Fläche 2, die mit matrixförmig angeordneten LEDs 6, 7 ausgestattet ist. Die Kontur des Sicherheitsbereichs einer nicht dargestellten Maschine ist durch leuchtende LEDs 7 markiert, während die restlichen LEDs 6 sich in einem inaktiven Betriebsmodus befinden.

Zusätzlich zur sichtbaren Markierung 7 des Sicherheitsbereichs wird in diesem Ausführungsbeispiel ein Laserscanner 8 zur Überwachung des Sicherheitsbereichs eingesetzt. Über die Steuereinrichtung sind der Sicherheitsbereich, die Markierung 7 des Sicherheitsbereichs und der Laserscanner 8 gekoppelt. Somit kann der Laserscanner (beispielsweise durch rotierendes Scannen) den Sicherheitsbereich auf sich darin befindliche Objekte, wie beispielsweise Gegenstände oder Personen, überwachen. Wird ein Objekt durch den Laserscanner 8 erkannt, so kann der Abstand des Laserscanners zum Objekt durch die Steuereinrichtung bestimmt werden und daraus abgeleitet werden, ob eine Verletzung des Sicherheitsbereichs vorliegt.

Wird eine Verletzung detektiert, so kann die Steuereinrichtung das Abschalten der Maschine, um die sich der Sicherheitsbereich befindet, veranlassen. Weiterhin kann bei einer Verletzung des Sicherheitsbereichs ein Warn-oder Alarmsignal in Form von blinkenden LEDs generiert werden.

Statt des in Figur 3 gezeigten Laserscanners können auch weitere, andere Überwachungseinrichtungen zum Einsatz kommen, um eine Verletzung des markierten Sicherheitsbereichs zu erkennen. Gemäß eines in Fign. 4 und 5 dargestellten Ausführungsbeispiels kann der Fußboden im Arbeitsbereich zusätzliche Taktilsensoren umfassen, durch die erkennbar ist wo im Arbeitsbereich sich Personen aufhalten.

Ein möglicher Fußbodenaufbau gemäß diesem Ausführungsbeispiel ist in Fig. 4 gezeigt. Hierbei werden auf den Fußboden 17 zwei zusätzliche Schichten 9 und 10 aufgebracht. Die untere der beiden Schichten besteht aus einer taktilen Sensormatte 9, die in mehrere Sensorzellen 18 unterteilt ist. Durch die Sensorzellen kann ortsaufgelöst ein Betreten des Fußbodens durch eine Person detektiert werden. Die Informationen über den Ort und die Art des Betretens wird dann an die Steuereinrichtung übermittelt.

Die obere der beiden in Figur 4 gezeigten Schichten umfasst eine LED-Matte, durch die regelmäßig angeordnete, mehrfarbige RGB LEDs auf den Fußboden aufgebracht werden. Diese LEDs werden individuell von der Steuereinrichtung kontrolliert, wodurch es möglich ist einen Sicherheitsbereich flexibel und genau durch eine leuchtende LED Markierung zu kennzeichnen. Auch ist es durch die Verwendung von LED Matten, auf denen die LEDs engmaschig angeordnet sind, möglich, andere Warnhinweise durch leuchtende RGB LEDs, die ein breites Farbspektrum wiedergeben können, zu visualisieren.
Jeder Sensorzelle 18 ist hierbei eine Anzahl an LEDs 6 örtlich zugeordnet und durch die Steuereinrichtung virtuell verknüpft, so dass es möglich ist, gezielt die der Sensorzelle 18 zugeordneten LEDs anzusteuern, wenn eine Berührung der Sensorzelle 18 detektiert wurde.
Gemäß einem weiteren Ausführungsbeispiel sind die Sensorzellen und LEDs, wie in Fig. 5 gezeigt, als eine kombinierte Licht-Sensormatte 11 auf den Fußboden 17 aufgebracht werden. Hierbei besteht die Licht-Sensormatte 11 aus mehreren Sensorzellen 18, denen jeweils eine Anzahl an LEDs 6 fest zugeordnet ist. Durch eine kombinierte Licht-Sensormatte ist eine direkte, fest verknüpfte Zuordnung zwischen Sensorzellen und LEDs gegeben.
Gemäß eines weiteren, in den Figuren nicht gezeigten Ausführungsbeispiels können die LED-Matten, die Sensormatten sowie die kombinierten Licht-Sensormatten auch auf weiteren Oberflächen verlegt werden, beispielsweise an Wänden, auf Tischen oder auf Oberflächen einer Maschine.

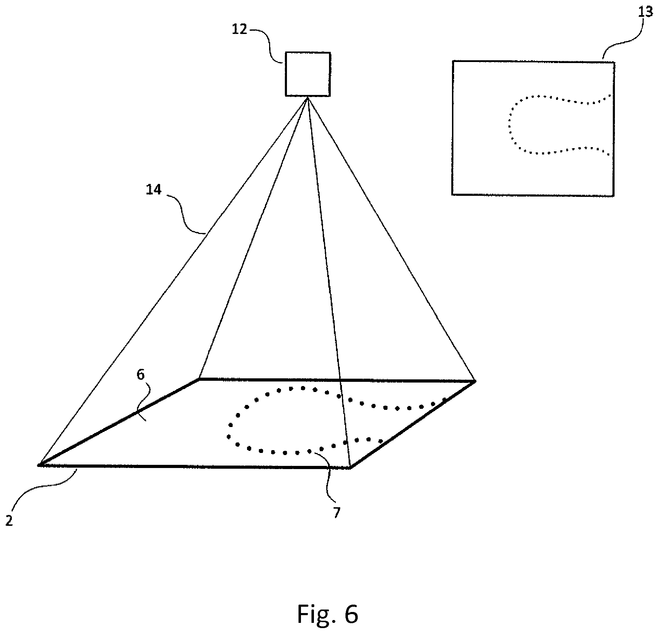

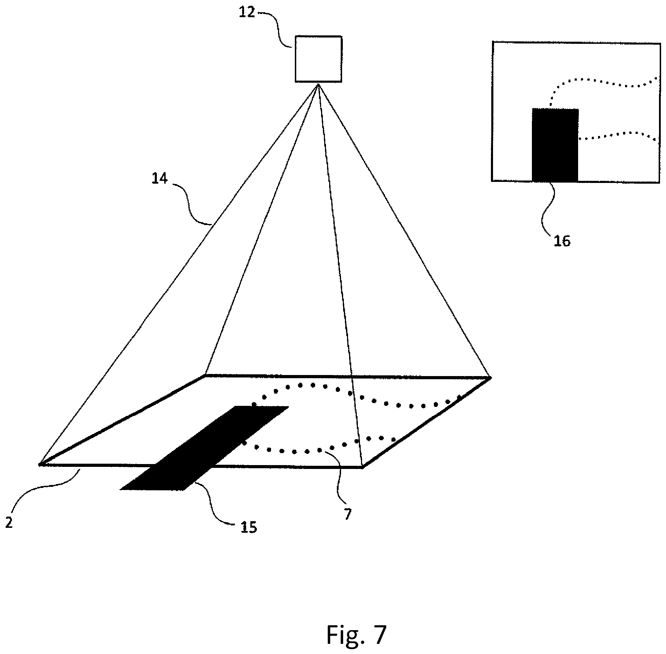

Fign. 6 und 7 zeigen eine weitere Ausführungsform des LED Fußbodens mit einer zusätzlichen Kameraüberwachung. Hierbei werden die LEDs 6, 7 die einen Sicherheitsbereich eines Fußbodens 2 eines Arbeitsbereichs markieren, durch eine Kamera 12 erfasst. Die Überwachungseinrichtung erhält hierbei zum einen von der Steuereinrichtung Informationen über das Soll-Abbild, bestehend aus den aktuell aktiven LEDs und ihren Koordinaten im Arbeitsbereich. Weiterhin erhält die Überwachungseinrichtung durch die Kamera 12 ein Ist- Abbild 13 eines Überwachungsbereichs 14 der Kamera 12.
Das von den LEDs ausgestrahlte Licht kann hierbei in einem sichtbaren oder nicht sichtbaren Spektrum (infrarot) liegen. Die Kamera ist dann auf die jeweilige Wellenlänge adaptiert, um Fremdeinflüsse zu vermeiden. Je nach Größe und Gestaltung des Arbeitsbereichs können auch Kamerasysteme mit mehreren Kameras zum Einsatz kommen.

Das aufgenommene Ist-Abbild wird mit dem Soll-Abbild verglichen, wobei es ausreicht nur die Pixel der relevanten Koordinaten der leuchtenden Markierung durch Addition oder Subtraktion zu vergleichen. Entspricht das Ist-Abbild 13 dem Soll-Abbild, wie in Fig. 6 gezeigt, so wird keine Verletzung des Sicherheitsbereichs durch die Überwachungseinrichtung detektiert.
Kommt es jedoch, wie in Fig. 7 gezeigt, zu einer Verdeckung einiger LEDs 7 der leuchtenden Markierung, so kann das auf ein Eindringen eines Menschen in den Sicherheitsbereich der Maschine hindeuten. In diesem Fall entspricht das Ist-Abbild 13' nicht mehr dem Soll-Abbild. Diese Diskrepanz zwischen den beiden Abbildern wird durch die Überwachungseinrichtung detektiert und an die Steuereinrichtung übermittelt. Daraufhin stoppt die Steuereinrichtung den gefahrvollen Betrieb oder die Bewegung der sich im Sicherheitsbereich befindlichen Maschine und löst einen Alarm aus.

Gemäß einer weiteren Ausführungsform ist es auch möglich den taktilen Fußboden, wie in Fign. 4 und 5 gezeigt mit der Kameraüberwachung, wie in Fign. 6 und 7 gezeigt, zu kombinieren. Dadurch wird neben der Markierung des Sicherheitsbereichs eine doppelte, redundante Überwachung mit diversitären Sensorprinzipien des Sicherheitsbereichs realisiert, so dass bei Ausfall oder fehlerhaftem Verhaltens eines der Überwachungssysteme trotzdem ein hohes Maß an Sicherheit der Personen in einem gemeinsamen Arbeitsbereich von Menschen und Robotern garantiert werden kann.

## Patentansprüche

1. Einrichtung zum Absichern eines Sicherheitsbereichs um mindestens eine automatisch arbeitende Maschine (3), umfassend
- eine auf oder in mindestens einer den Sicherheitsbereich begrenzenden Fläche (2) angeordnete, sichtbar oder unsichtbar leuchtende Markierung (4; 5), durch die zumindest ein Teils des Sicherheitsbereichs und/oder zumindest ein Teils einer Begrenzung des Sicherheitsbereichs markiert ist,
- eine sensorische Überwachungseinrichtung konfiguriert zur Detektion einer Verletzung des Sicherheitsbereichs, wobei die Überwachungseinrichtung ein ortsauflösendes, berührungssensitives Sensorsystem und/oder eine Aufnahmevorrichtung (12) zur bildlichen Überwachung der leuchtenden Markierung des Sicherheitsbereichs umfasst,
- eine Steuereinrichtung (1) konfiguriert zur Steuerung der Maschine (3) und/oder zur Bestimmung des Sicherheitsbereichs aus einem Betriebszustand der Maschine (3) und/oder zur Steuerung einer Form, einer Struktur und/oder eines Ortes der leuchtenden Markierung (4; 5) und weiterhin konfiguriert zur Änderung des Betriebszustands der Maschine (3) und/oder zur Änderung des Betriebsmodus mindestens einer Lichtquelle (6, 7) und/oder zum Auslösen eines Alarms abhängig von einer Detektion einer Verletzung des Sicherheitsbereichs durch die Überwachungseinrichtung konfiguriert ist,
wobei
auf oder in der den Sicherheitsbereich begrenzenden Fläche (2) eine Vielzahl von ortsaufgelöst ansteuerbaren Lichtquellen (6,7) angeordnet ist, jede der Lichtquellen (6,7) einen inaktiven und mindestens einen aktiven Betriebsmodus umfasst, wobei der Betriebsmodus der Lichtquellen durch die Steuereinrichtung steuerbar ist, und die leuchtende Markierung (4;5) als mindestens eine der Lichtquellen (6,7) in einem aktiven Betriebsmodus ausgebildet ist;
**dadurch gekennzeichnet, dass** der Betriebsmodus jeder der Lichtquellen (6,7) individuell durch die Steuereinrichtung (1) steuerbar ist.

2. Einrichtung zum Absichern gemäß Anspruch 1, **dadurch gekennzeichnet, dass** die Überwachungseinrichtung das berührungssensitive Sensorsystem umfasst, welches ein ortsauflösendes, berührungssensitives Sensorsystem ist, das eine Vielzahl von Sensorzellen (18) umfasst, welche auf oder in der den Sicherheitsbereich begrenzenden Fläche (2) angeordnet sind.

3. Einrichtung zum Absichern gemäß Anspruch 2, **dadurch gekennzeichnet, dass** die Überwachungseinrichtung ausgebildet ist, eine Verletzung des Sicherheitsbereichs zu detektieren, wenn durch das Sensorsystem eine Berührung oberhalb eines festgelegten Schwellenwerts innerhalb des Sicherheitsbereich erfasst ist.

4. Einrichtung zum Absichern gemäß Anspruch 2 oder 3, **dadurch gekennzeichnet, dass** jeder der Vielzahl von Sensorzellen (18) mindestens eine der Lichtquellen (6, 7) örtlich zugeordnet ist und, optional,
dass die Vielzahl der Lichtquellen (6, 7) und Sensorzellen (18) als kombinierte Licht-Sensormatten (11) ausgebildet sind.

5. Einrichtung zum Absichern gemäß einem der vorherigen Ansprüche, **dadurch gekennzeichnet, dass** die Überwachungseinrichtung die Aufnahmevorrichtung (12) zur bildlichen Überwachung der leuchtenden Markierung des Sicherheitsbereichs umfasst.

6. Einrichtung zum Absichern gemäß Anspruch 5, **dadurch gekennzeichnet, dass** die Überwachungseinrichtung ausgebildet ist, eine Verletzung des Sicherheitsbereichs zu detektieren, wenn mindestens eine vorgegebene Anzahl der den Sicherheitsbereich markierenden Lichtquellen (6, 7) nicht durch die Aufnahmevorrichtung (12) erfasst sind.

7. Einrichtung zum Absichern gemäß einem der vorherigen Ansprüche, **dadurch gekennzeichnet, dass** die Überwachungseinrichtung als Laserscanner (8) ausgebildet ist.

8. Einrichtung zum Absichern gemäß einem der vorherigen Ansprüche, **dadurch gekennzeichnet, dass** die Lichtquellen (6, 7) punktförmig ausgebildet sind und/oder dass die Lichtquellen (6, 7) auf oder in der Fläche (2) regelmäßig und/oder matrixförmig und/oder engmaschig mit einem maximalen Abstand von 10cm angeordnet sind.

9. Einrichtung zum Absichern gemäß einem der vorherigen Ansprüche, **dadurch gekennzeichnet, dass** die Steuereinrichtung (1) konfiguriert ist, den Sicherheitsbereich bei einer Bewegung der Maschine (3) dynamisch und in Korrespondenz zur Bewegung der Maschine (3) zu ändern.

10. Einrichtung zum Absichern gemäß einem der vorherigen Ansprüche, **dadurch gekennzeichnet, dass** die Steuereinrichtung (1) weiterhin konfiguriert ist
- den Sicherheitsbereich abhängig von einer Änderung des Betriebszustands der Maschine (3) zu ändern und/oder
- bei einer Änderung des Sicherheitsbereichs die Markierung (4; 5) und/oder den Betriebsmodus mindestens einer der Lichtquellen (6,7) zu ändern.

11. Einrichtung zum Absichern gemäß einem der vorherigen Ansprüche, **dadurch gekennzeichnet, dass** die Lichtquellen (6, 7) in ihrer Farbe, Helligkeit und/oder Frequenz durch die Steuereinheit (1) modulierbar sind, und/oder dass zumindest eine Teilmenge der Vielzahl von Lichtquellen (6, 7) auf oder in Lichtmatten (10) angeordnet sind.

12. Einrichtung zum Absichern gemäß einem der vorherigen Ansprüche, **dadurch gekennzeichnet, dass** die Steuereinrichtung (1) weiterhin konfiguriert ist, den Sicherheitsbereich in mindestens einen ersten und einen zweiten Sicherheitsbereich aufzuteilen, wobei durch die leuchtende Markierung (4; 5) zumindest ein Teils des ersten Sicherheitsbereichs und/oder zumindest ein Teils einer Begrenzung des ersten Sicherheitsbereichs, sowie zumindest eine Teil des zweiten Sicherheitsbereichs und/oder zumindest ein Teil einer Begrenzung des zweiten Sicherheitsbereichs markiert ist.

13. Einrichtung zum Absichern gemäß einem der vorherigen Ansprüche, **dadurch gekennzeichnet, dass** durch unterschiedliche Farben, Helligkeiten und/oder Frequenzen der Lichtquellen (6, 7) mindestens zwei unterschiedliche entweder disjunkte, ineinander verschachtelte und/oder überlappende Sicherheitsbereiche und/oder Sicherheitsstufen eines Sicherheitsbereichs markiert sind.

14. Verwendung einer Einrichtung nach einem der Ansprüche 1 bis 13 zum Absichern eines Sicherheitsbereichs einer Maschine.

15. Verfahren zum Absichern eines Sicherheitsbereichs einer Maschine (3), wobei das Verfahren folgende Schritte umfasst:
- Bestimmung eines Sicherheitsbereichs einer Maschine (3);
- Ansteuerung, durch eine Steuereinrichtung (1), von ortsaufgelöst ansteuerbaren Lichtquellen (6,7), die auf oder in mindestens einer den Sicherheitsbereich begrenzenden Fläche (2) angeordnet sind, derart, dass der Sicherheitsbereich der Maschine (3) markiert wird, wobei jede der Lichtquellen (6,7) einen inaktiven und mindestens einen aktiven Betriebsmodus umfasst, der durch die Steuereinrichtung (1) steuerbar ist,
- Detektieren einer Verletzung des Sicherheitsbereichs durch eine sensorische Überwachungseinrichtung, wobei die Überwachungseinrichtung ein ortsauflösendes, berührungssensitives Sensorsystem und/oder eine Aufnahmevorrichtung (12) zur bildlichen Überwachung der leuchtenden Markierung des Sicherheitsbereichs umfasst,
- Ändern eines Betriebszustands der Maschine (3) und/oder Ändern des Betriebsmodus mindestens einer Lichtquelle (6,7) und/oder Auslösen eines Alarms, wenn eine Verletzung des Sicherheitsbereichs detektiert wurde;
**dadurch gekennzeichnet, dass** der Betriebsmodus jeder der Lichtquellen (6,7) individuell durch die Steuereinrichtung (1) steuerbar ist.

## Claims

1. A device for securing a safety area around at least one automatically operating machine (3), comprising
- a visible or invisible luminous marking (4; 5) arranged on or in at least one surface (2) delimiting the safety area, by which luminous marking at least part of the safety area and/or at least part of a delimitation of the safety area is marked, a sensoric monitoring device configured for detecting a violation of the safety area, the monitoring device comprising a spatially resolving, contact-sensitive sensor system and/or a recording device (12) for visual monitoring of the luminous marking of the safety area,
- a control device (1) configured for controlling the machine (3) and/or for determining the safety area from an operating state of the machine (3) and/or for controlling a shape, a structure and/or a location of the luminous marking (4; 5) and further configured for changing the operating state of the machine (3) and/or for changing the operating mode of at least one light source (6, 7) and/or for triggering an alarm depending on a detection of a violation of the safety area by the monitoring device,
a plurality of spatially resolved activable light sources (6,7) being arranged on or in the surface (2) delimiting the safety area, each of the light sources (6,7) comprising an inactive and at least one active operating mode, the operating mode of the light sources being controllable by the control device, and the luminous marking (4; 5) being designed as at least one of the light sources (6, 7) in an active operating mode;
**characterized in that** the operating mode of each of the light sources (6, 7) can be controlled individually by the control device (1).

2. The device for securing according to claim 1, **characterized in that** the monitoring device comprises the contact-sensitive sensor system, which is a spatially resolving, contact-sensitive sensor system comprising a plurality of sensor cells (18) which are arranged on or in the surface (2) delimiting the safety area.

3. The device for securing according to claim 2, **characterized in that** the monitoring device is configured to detect a violation of the safety area if the sensor system detects a contact above a defined threshold value within the safety area.

4. The device for securing according to claim 2 or 3, **characterized in that** each of the plurality of sensor cells (18) is spatially associated with at least one of the light sources (6, 7) and, optionally,
that the plurality of light sources (6, 7) and sensor cells (18) are designed as combined light sensor mats (11).

5. The device for securing according to any one of the preceding claims, **characterized in that** the monitoring device comprises the recording device (12) for visual monitoring of the luminous marking of the safety area.

6. The device for securing according to claim 5, **characterized in that** the monitoring device is designed to detect a violation of the safety area if at least a predetermined number of the light sources (6, 7) marking the safety area are not detected by the recording device (12).

7. The device for securing according to any one of the preceding claims, **characterized in that** the monitoring device is designed as a laser scanner (8).

8. The device for securing according to any one of the preceding claims, **characterized in that** the light sources (6, 7) are point-shaped in design and/or that the light sources (6, 7) on or in the surface (2) are arranged regularly and/or in a matrix shape and/or close-meshed with a maximum distance of 10 cm.

9. The device for securing according to any one of the preceding claims, **characterized in that** the control device (1) is configured to dynamically change the safety area when the machine (3) moves and in correspondence with the movement of the machine (3).

10. The device for securing according to any one of the preceding claims, **characterized in that** the control device (1) is further configured
- to change the safety area depending on a change in the operating state of the machine (3) and/or
- to change the marking (4; 5) and/or the operating mode of at least one of the light sources (6, 7) in the event of a change of the safety area.

11. The device for securing according to any one of the preceding claims, **characterized in that** the light sources (6, 7) can be modulated in terms of their color, brightness and/or frequency by the control unit (1), and/or that at least a subset of the plurality of light sources (6, 7) are arranged on or in light mats (10).

12. The device for securing according to any one of the preceding claims, **characterized in that** the control device (1) is further configured to divide the safety area into at least a first and a second safety area, wherein at least part of the first safety area and/or at least part of a delimitation of the first safety area, and at least part of the second safety area and/or at least part of a delimitation of the second safety area is marked by the luminous marking (4; 5).

13. The device for securing according to any one of the preceding claims, **characterized in that** at least two different either disjoint, nested and/or overlapping safety areas and/or security levels of a safety area are marked by different colors, brightnesses and/or frequencies of the light sources (6, 7).

14. A use of a device according to any one of claims 1 to 13 for securing a safety area of a machine.

15. A method for securing a safety area of a machine (3), the method comprising the following steps:
- determining a safety area of a machine (3);
- activating, by a control device (1), spatially resolved activable light sources (6, 7), which are arranged on or in at least one surface (2) delimiting the safety area, such that the safety area of the machine (3) is marked, each of the light sources (6, 7) comprising an inactive and at least one active operating mode which can be controlled by the control device (1),
- detecting a violation of the safety area by a sensoric monitoring device, the monitoring device comprising a spatially resolving, contact-sensitive sensor system and/or a recording device (12) for visual monitoring of the luminous marking of the ksafety area,
- changing an operating state of the machine (3) and/or changing the operating mode of at least one light source (6, 7) and/or triggering an alarm if a violation of the safety area has been detected;
**characterized in that** the operating mode of each of the light sources (6, 7) can be controlled individually by the control device (1).

## Revendications

1. Dispositif pour protéger une zone de sécurité autour d'au moins une machine (3) fonctionnant de manière automatique, comprenant
- un marquage (4 ; 5) lumineux, visible ou invisible, disposé sur ou dans au moins une surface (2) délimitant la zone de sécurité, par lequel au moins une partie de la zone de sécurité et/ou au moins une partie d'une limite de la zone de sécurité, est repérée, un dispositif de surveillance sensoriel conçu pour la détection d'une violation de la zone de sécurité, dans lequel le dispositif de surveillance comprend un système de capteur sensible au toucher à résolution spatiale, et/ou un dispositif de prises de vue (12) pour la surveillance par images du marquage lumineux de la zone de sécurité,
- un dispositif de commande (1) conçu pour la commande de la machine (3) et/ou pour la détermination de la zone de sécurité à partir d'un état de fonctionnement de la machine (3), et/ou pour la commande d'une forme, d'une structure et/ou d'un emplacement du marquage lumineux (4 ; 5) et conçu en outre pour la modification de l'état de fonctionnement de la machine (3) et/ou pour la modification du mode de fonctionnement d'au moins une source de lumière (6, 7) et/ou pour le déclenchement d'une alarme en fonction d'une détection d'une violation de la zone de sécurité, par le dispositif de surveillance,
dans lequel
un grand nombre de sources de lumière (6,7) à résolution spatiale pouvant être commandées est disposé sur ou dans la surface (2) délimitant la zone de sécurité, chacune des sources de lumière (6,7) comprend un mode de fonctionnement inactif et au moins un mode de fonctionnement actif, où le mode de fonctionnement des sources de lumière peut être commandé par le dispositif de commande, et le marquage lumineux (4 ;5) est conçu sous forme d'au moins une des sources de lumière (6,7) dans un mode de fonctionnement actif ;
**caractérisé en ce que** le mode de fonctionnement de chacune des sources de lumière (6,7) peut être commandé de manière individuelle par le dispositif de commande (1).

2. Dispositif de protection selon la revendication 1, **caractérisé en ce que** le dispositif de surveillance comprend le système de capteur sensible au toucher, lequel est un système de capteur sensible au toucher à résolution spatiale qui comprend un grand nombre de cellules de capteur (18), lesquelles sont disposées sur ou dans la surface (2) délimitant la zone de sécurité.

3. Dispositif de protection selon la revendication 2, **caractérisé en ce que** le dispositif de surveillance est conçu pour détecter une violation de la zone de sécurité lorsqu'un toucher au-dessus d'une valeur de seuil prédéfinie est détecté à l'intérieur de la zone de sécurité par le système de capteur.

4. Dispositif de protection selon la revendication 2 ou la revendication 3, **caractérisé en ce que** chacune parmi le grand nombre de cellules de capteur (18) est spatialement associée à au moins une des sources de lumière (6, 7), et, éventuellement,
**que** le grand nombre de sources de lumière (6, 7) et de cellules de capteur (18) est conçu sous forme de tapis de détection de lumière (11) combiné.

5. Dispositif de protection selon l'une des revendications précédentes, **caractérisé en ce que** le dispositif de surveillance comprend le dispositif de prises de vue (12) pour la surveillance par images du marquage lumineux de la zone de sécurité.

6. Dispositif de protection selon la revendication 5, **caractérisé en ce que** le dispositif de surveillance est conçu pour détecter une violation de la zone de sécurité, lorsqu'au moins un nombre prédéfini des sources de lumière (6, 7) marquant la zone de sécurité n'est pas détecté par le dispositif de prises de vue (12).

7. Dispositif de protection selon l'une des revendications précédentes, **caractérisé en ce que** le dispositif de surveillance est conçu sous forme d'un scanner laser (8).

8. Dispositif de protection selon l'une des revendications précédentes, **caractérisé en ce que** les sources de lumière (6, 7) sont conçues sous forme de points, et/ou que les sources de lumière (6, 7) sont disposées sur ou dans la surface (2) de manière régulière, et/ou en forme de matrice, et/ou en forme d'un maillage serré avec une distance maximale de 10 cm.

9. Dispositif de protection selon l'une des revendications précédentes, **caractérisé en ce que** le dispositif de commande (1) est conçu pour modifier la zone de sécurité de manière dynamique et en correspondance avec le déplacement de la machine (3) lors d'un déplacement de la machine (3).

10. Dispositif de protection selon l'une des revendications précédentes, **caractérisé en ce que** le dispositif de commande (1) est en outre conçu pour
- modifier la zone de sécurité en fonction d'une modification de l'état de fonctionnement de la machine (3), et/ou
- pour modifier le marquage (4 ; 5), et/ou le mode de fonctionnement d'au moins une des sources de lumière (6, 7) lors dune modification de la zone de sécurité.

11. Dispositif de protection selon l'une des revendications précédentes, **caractérisé en ce que** les sources de lumière (6, 7) sont modulables dans leur couleur, leur luminosité et/ou fréquence par l'unité de commande (1), et/ou qu'au moins une quantité partielle de la multiplicité des sources de lumière (6, 7) est disposée sur ou dans des tapis de lumière (10).

12. Dispositif de protection selon l'une des revendications précédentes, **caractérisé en ce que** le dispositif de commande (1) est en outre conçu pour subdiviser la zone de sécurité en au moins une première et une deuxième zone de sécurité, où au moins une partie de la première zone de sécurité, et/ou au moins une partie d'une limite de la première zone de sécurité, ainsi qu'au moins une partie de la deuxième zone de sécurité, et/ou d'au moins une partie d'une limite de la deuxième zone de sécurité, est marquée par le marquage lumineux (4 ; 5).

13. Dispositif de protection selon l'une des revendications précédentes, **caractérisé en ce qu'**au moins deux zones de sécurité différentes, soit disjointes, imbriquées l'une dans l'autre et/ou superposées, et/ou échelons de sécurité d'une zone de sécurité, sont marqués par des couleurs, des luminosités et/ou des fréquences différentes des sources de lumière (6, 7).

14. Emploi d'un dispositif selon l'une des revendications 1 à 13 pour la protection d'une zone de sécurité d'une machine.

15. Procédé de protection d'une zone de sécurité d'une machine (3), le procédé comprenant les étapes suivantes :
- détermination d'une zone de sécurité d'une machine (3) ;
- mise en marche, par un dispositif de commande (1), de sources de lumière (6, 7) à résolution spatiale pouvant être commandées, qui sont disposées sur ou dans au moins une surface (2) délimitant la zone de sécurité de telle manière que la zone de sécurité de la machine (3) est marquée, où chacune des sources de lumière (6,7) comprend un mode de fonctionnement inactif et au moins un mode de fonctionnement actif qui peut être commandé par le dispositif de commande (1),
- détection d'une violation de la zone de sécurité par un dispositif de surveillance sensoriel, où le dispositif de surveillance comprend un système de capteur sensible au toucher à résolution spatiale et/ou un dispositif de prises de vue (12) pour la surveillance par images du marquage lumineux de la zone de sécurité,
- modification d'un état de fonctionnement de la machine (3), et/ou modification du mode de fonctionnement d'au moins une des sources de lumière (6,7), et/ou déclenchement d'une alarme lorsqu'une violation de la zone de sécurité a été détectée ;
**caractérisé en ce que** le mode de fonctionnement de chacune des sources de lumière (6,7) peut être commandé de manière individuelle par le dispositif de commande (1).
